(19) Europäisches Patentamt
European Patent Office
Office européen des brevets

(11) **EP 2 113 657 A2**

(12) **EUROPEAN PATENT APPLICATION**

(43) Date of publication:
**04.11.2009 Bulletin 2009/45**

(51) Int Cl.:
**F03B 13/14** (2006.01)    **F03B 13/18** (2006.01)

(21) Application number: **09380089.4**

(22) Date of filing: **28.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.04.2008 ES 200801216**

(71) Applicant: **Rebon Mayobre, Manuel
15624 Ares a Coruna (ES)**

(72) Inventor: **Rebon Mayobre, Manuel
15624 Ares a Coruna (ES)**

(74) Representative: **Carvajal y Urquijo, Isabel et al
Clarke, Modet & C.
C/ Goya, 11
28001 Madrid (ES)**

(54) **Wave power plant**

(57)    The object of the invention consists of a number of floats (1) which go up and down by the movement of the waves. Inside each float there is a cable (4), which goes down to a roller (5), fixed to the sea floor, from which it runs horizontally towards the head of a rod (7). This cable pulls the piston (13) of a lift and force pump, in horizontal position. This pump has an admission valve (9), and another expulsion valve (11) through which the water goes in and out, water which is sent through a hose (8) which joins the pump and the deposit, placed at great altitude. The water from the deposit (42) comes down to a turbine (45), whose rotation moves a generator which produces electricity.

FIG.1

**Description**

The present invention, as stated in this descriptive memory, refers to a hydroelectric power plant driven by ocean waves force, similar to those already in use, but with the following differences: first, instead of using water from a river, it uses sea water, which is propelled by pumps on the sea floor; and second, instead of using a large amount of water stored in reservoir, as in hydroelectric power plants today, the present invention is **characterized in that** it is almost unnecessary to store water; instead, it uses a small water deposit in great altitude. From the deposit, the water comes down to a turbine at sea level and this turbine moves a generator which produces electricity.

## BACKGROUND OF THE INVENTION

There are no known precedents.

## DESCRIPTION OF THE INVENTION

The functioning of a hydroelectric power plant driven by ocean waves is a mechanism which, in general terms, consists of a number of straight prism-shaped floats of large dimensions, which are always conveniently oriented towards the direction of the waves. Said floats have a cable in its lower part, which goes down to a roller, fixed to the sea floor. Said roller changes the direction of the cable, so that it can be directed towards the head of the rod of a lift and force pump on the sea floor.

Due to the effect of the waves, the float goes up and pulls the cable, which in turn pulls the rod, starting the pump. Said pump sends the sea water through a hose to a deposit in great altitude; from the deposit the water falls through a pipeline to the turbine located almost at sea level, turbine which, when rotating, moves a generator producing electricity.

In order to complete this description and aiming at a better understanding of the characteristics of the invention, a series of drawings is attached to this descriptive memory to make it easier to understand the functioning and advantages of the mechanism object of the present invention.

## BRIEF DESCRIPTION OF THE DRAWINGS

Figure 1 shows a general view of the system, on the left you can see the float in the sea and the cable connecting it to the pump, from where a hosepipe comes out and goes to the land. On the right part, it is possible to see the shore, where the deposit is situated with its pipelines, intake and outlet ones, to allow water come in and out, and almost at sea level the turbine and generator are located.

Figure 2 shows an elevation view of the float, the roller, the pump in horizontal position and piston return buoy.

Figure 3 is an alternative for the pump in horizontal position, and shows an elevation view of the float, two rollers, the pump in vertical position and the rod facing downwards, held by a float attached to the body of said pump, cables to keep it firm to the sea floor, and its piston return buoy.

Figure 4 is an alternative for the pump in horizontal position. It is the same as figure 3, but in this case the pump is fixed to the bottom by pillars.

Figure 5 is an alternative for the pump in horizontal position, and shows an elevation view of the pump in vertical position with the rod facing upwards and the rollers are eliminated, as the pump is fixed to the bottom by cables.

Figure 6 shows an elevation view of a platform resting on the sea floor with the pumps placed outside the water.

Figure 7 shows a plan view of Figure 6.

Figure 8 shows a plan view of the float.

Figure 9 shows an elevation view of the float.

Figure 10 shows a side elevation view of the float.

Figure 11 shows a plan view of the float, with four positioning buoys, the cables and counterweights orienting it in the direction of the waves.

Figure 12 shows a plan view of the float, rotated 45 degrees with respect to figure 11.

Figure 13 shows an elevation view of the float, with its positioning buoys, cables and counterweights.

Figure 14 shows a perspective view of a valve chest, to which several hoses from the pumps are attached, and the exit duct to the deposit.

Figure 15 shows a plan view of figure 14.

Figure 16 shows a perspective view of the roller 5, with a front broken-out section.

Figure 17 shows a front view of the roller 5, with a cross-section at the middle of the roller 5a.

Figure 18 shows a right side view of the roller 5, with a longitudinal section at the middle of roller 5a.

Figure 19 shows a plan view of roller 5, with a longitudinal section at the middle of the rollers 5a.

Figure 20 shows a side view of the positioning buoy 50, with its engine and cable.

Figure 21 shows an elevation view of the positioning buoy.

Figure 22 shows a view of the base on the sea floor, with its anchors for pumps, rollers and cables.

Figure 23 shows a view of the pre-manufactured piece, consisting of the base, the pillar and the roller.

Figure 24 shows an elevation view of the pump with its measures, in a possible real case.

Figure 25 shows a side elevation view of a float and its measures, floating in the sea, in a possible real case.

Figure 26 shows the profile of a 2-meter wave, or an orthocycloid with a 1-meter ratio, and the side profile of the float at its top, in a possible real case.

## DESCRIPTION OF A PREFERRED EMBODIMENT OF THE INVENTION

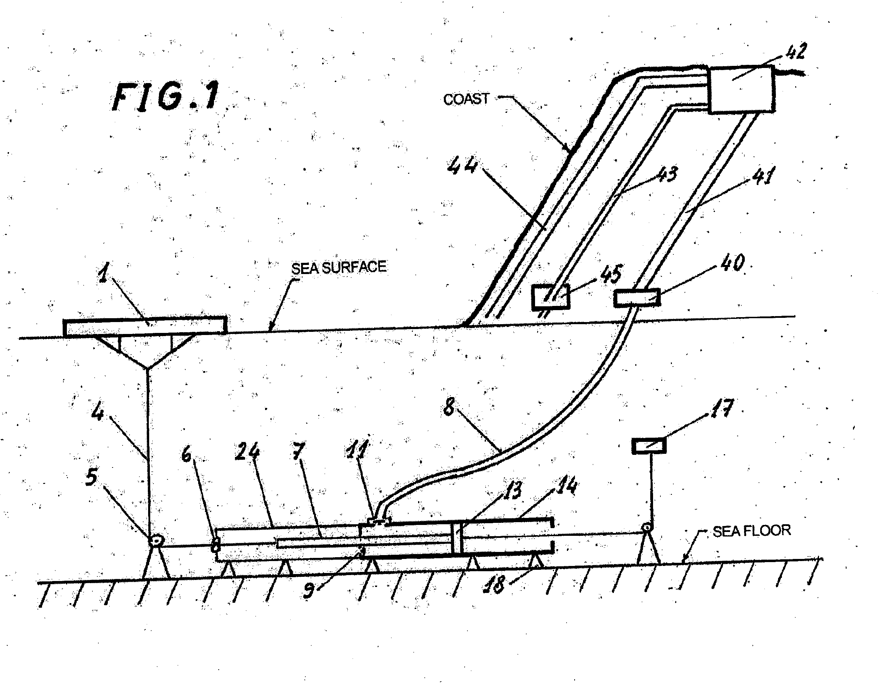

In view of the aforementioned drawings, a description of figure 1 is now provided. It is a view of the whole system, comprising a float 1, with a steel cable 4 fastened in its lower part, coming down vertically to the sea floor, where it changes direction by means of a highly resistant roller 5, fixed to the sea floor; from which it moves horizontally towards the head of the rod 7, which is joined to the piston 13 of a lift and force pump 14. When the float rises due to the effect of the waves, it pulls the cable 4, which in turn forces the piston to start its stroke, causing a pressure increase inside the cylinder, which opens the expulsion valve 11 and, at the same time, closes the inlet valve 9. The water inside the cylinder goes out through the expulsion valve and goes to the hose 8 which is connected to said valve, and joins the pump to the land; there, the water goes through the valve chest 40, and from here, due to the pressure, it goes up through the pipe 41 to the storage deposit 42 in great altitude. Two pipes come out from the deposit, which are pipe 44, which prevents flooding in the deposit, and pipe 43, which takes the water to the turbine 45.

When the float 1 goes down to the trough of the wave, at the same time, the small float 17 pulls the piston and takes it back to the beginning of its stroke, causing the inlet valve 9 to open and the cylinder to be filled with water, thus starting a new repetitive cycle.

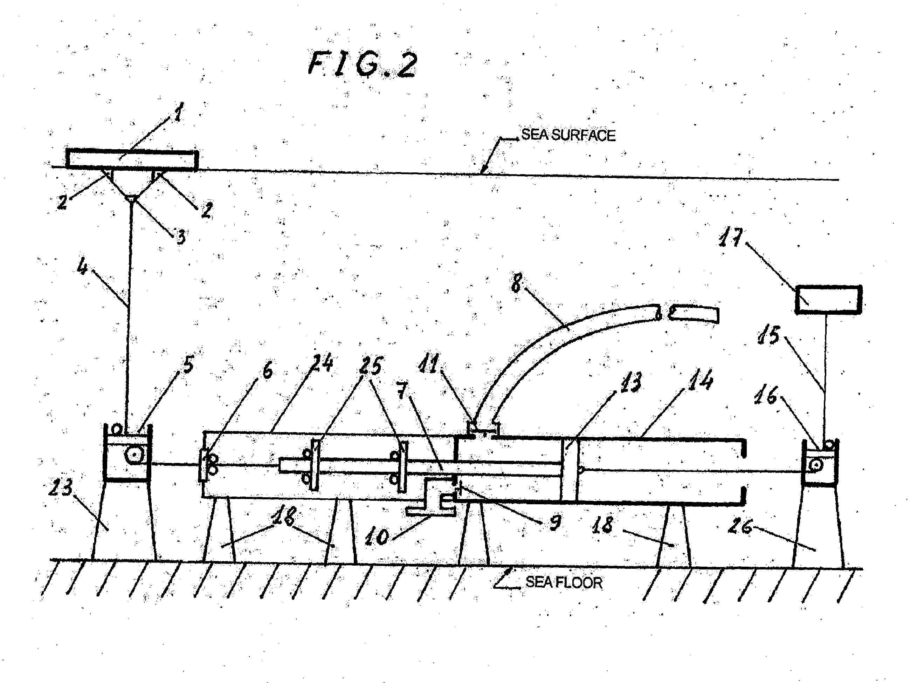

Next, it is described figure 2, which shows a float 1, the roller 5, the rod 7, and the hose 8 joining the pump to land (for the sake of clarity, in the drawing the hose comes from the upper part of the pump, but it could come from the lower part of the pump, resting on the sea floor, and reach land). The pump is a regular lift and force pump, in horizontal position, where 14 is the body of the pump on top of some pillars 18 fixed to a base on the sea floor. The pump cylinder is closed on the left and open on the right, piston 13 is inside the cylinder and it will have a maximum stroke, which will be the one chosen as desired and to achieve this, the rod can be taken to a stop (if the rod does not have a stop and the waves are very high, its stroke will be too long and the pump will break). During its stroke, the piston 13 increases the pressure in the cylinder, which opens the expulsion valve 11 and at the same time closes admission valve 9. The water inside the cylinder goes through the expulsion valve to the hose 8, which takes the water to the valve chest on land.

The body of the pump has two well defined parts: to the left of the piston there is a chamber to which the piston has no access, where the admission and expulsion valves are located; and to the right of the piston there is a cylinder where the piston makes its stroke.

The length of the cylinder will be equal to the maximum stroke of the piston plus a distance equal to the difference of heights between the lowest and the highest spring tide of the area; for example, if the piston is forced to make a maximum stroke of 5 m and, on the other hand, the difference of spring tides in the area is 3 m, the result would be: 5 + 3 = 8 m, which is the length the cylinder must have.

To the right of the body of the pump there is a small float 17 (it could be a counterweight), whose function is to pull the cable 15 and bring the piston 13 to its initial position; which coincides with the moment the float is on the wave trough. The cable 15, which joins the outer part of the piston to the float 17, changes direction by means of the small roller 16, which is fixed to the base on the sea floor by means of the pillar 26.

By coming out from the roller 5 horizontally, the cable 4 of the float can be slightly slanted and not aligned with the head of the rod, since the float can function from different angles depending on the direction of the waves; in order to avoid such possible lack of alignment, a set of rollers 6 is used, formed by two vertical and two horizontal rollers; through which the cable 4 goes fit to them and comes out already aligned with the rod. This set of rollers must be resistant and fixed to structure 24, which is joined to the body of the pump and fixed to the supports 18. The structure 24 has several sets of rollers 25 similar to the set 6 but less resistant, which serve to prevent the rod from bending.

The admission valve 9 through which water comes in when the piston is performing its backward movement, must include a filter 10. It is supposed that sand in suspension is the worst enemy of the rings of the piston and the cylinder liners, since it acts as abrasive. The filter could have the shape of a big horizontal box, open only in the lower part, in which there is a net to prevent the sand from entering. By placing this net horizontally, the sand on top of it will gradually fall down due to its own weight. In order to clean the net more effectively, a self-cleaning system could be applied. For example, taking advantage of the upward and downward movement of the float 17 or the cable 4 of the float, and by means of a simple cable, it is possible to transmit that movement to a cleaning system in the filter, which will clean when there is no water aspiration. It could also use an independent system propelled by an engine using current from land.

The pump in figure 2 is placed in horizontal position and can be used in shallow waters with currents, since it is fixed to the sea floor and could be easily mounted with the help of divers and frogmen.

The hose 8, which joins the pump to the deposit, when it is filled with water to the level of the deposit, produces pressure inside the cylinder of the pump, located on the sea floor; which is the same as the pressure the pump would have if it were placed at sea level, since the pressure, due to the depth, acts on the exterior face of the piston, and the pressure of water in the hose 8 acts on the inner side of the piston, mutually compensating each other. Therefore, the depth to which the pump can be placed on the sea does not increase the pressure inside the pump.

It is advisable to have a back-up pump functioning on the sea, in case any of the other pumps is damaged and also for the maintenance of the group of pumps, since they could be taken out and fixed one by one, and the group would never stop functioning.

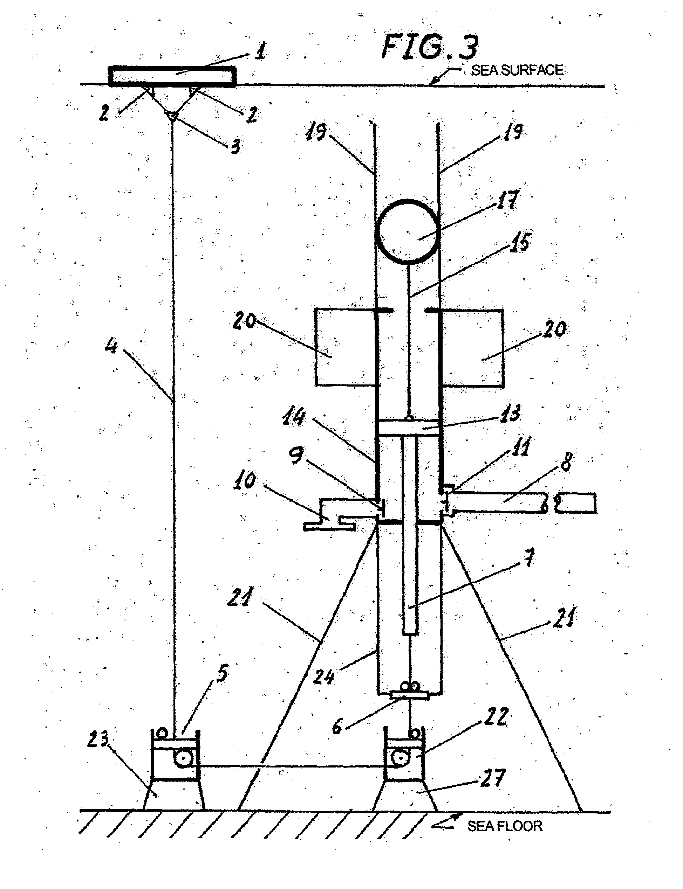

Next, figure 3 is described. It refers to an alternative to the pump in horizontal position, it is similar to said pump, but in this case it is in vertical position, with the rod facing down and fixed to the sea floor by cables 21. The numbering of the parts of this pump is the same as that of figure 2.

This pump may be appropriate for deep areas with small currents, as the whole structure could be easily assembled from a ship specialized in submarine work; it would only be necessary to place the bases on the sea floor, and make the rollers 5 and 22 be fixed to them, along with the cables 21 to keep the pump fixed to the floor.

The rod 7 functions vertically, therefore bending is avoided. The small float 17 used for the return of the piston is circular and moves inside a rail 19. It also has a float 20 attached to the body of the pump, keeping it in vertical position as it pulls opposite the cables 21, keeping the pump firm on the sea floor. The float 20 should have enough thrust to hold the weight of the submerged pump, plus the downward tension of the cable 4 when the float is working, and the deviation caused by the current in the area.

In this case, the pump carries two high resistance rollers, 5 and 22, in order to deviate the cable 4. The roller 22 is adjusted to the cable and avoids deviation. In order to align the cable to the head of the rod, the pump has the set of rollers 6, formed by two vertical and two horizontal resistant rollers, fixed to the structure 24; the cable 4 going through said rollers.

As it has already been stated in the previous case, the depth to which the pump is situated does not increase the pressure inside it.

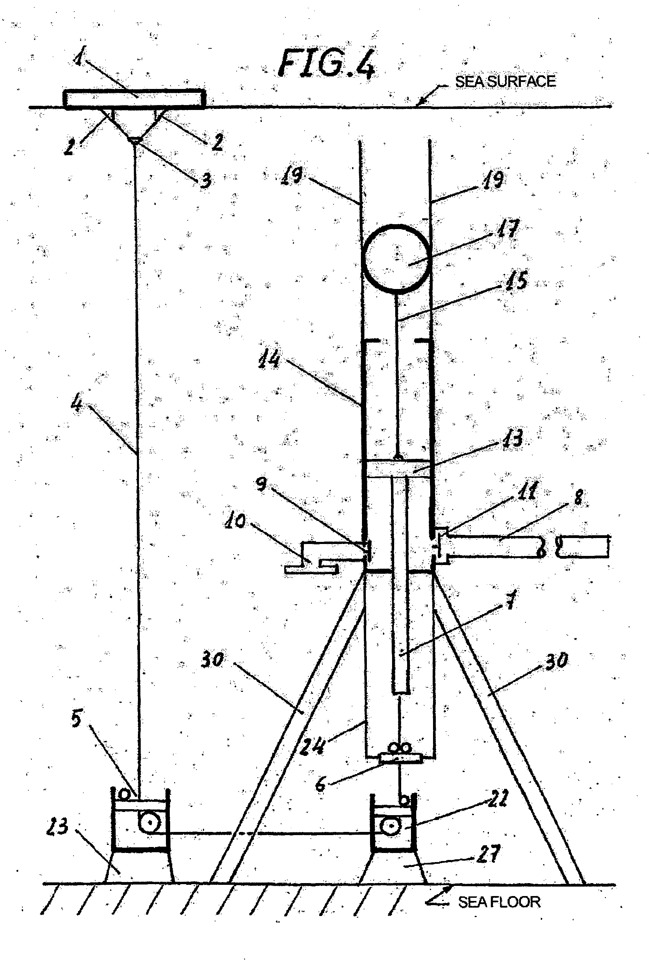

Next, figure 4 is described; it refers to another alternative to the pump in horizontal position which is similar to said pump, but in this case the pump is placed in vertical position, with the rod placed downwards, and it is fixed to the sea floor by means of solid pillars 30. This pump, being fixed to the sea floor, does not need a float attached to it. The numbers of the parts of the pump corresponds to those in figure 2. The small float 17 for the piston return is circular and moves inside rail 19.

This pump is appropriate for shallow areas with currents, as it is fixed to the sea floor and its assembling would not be difficult.

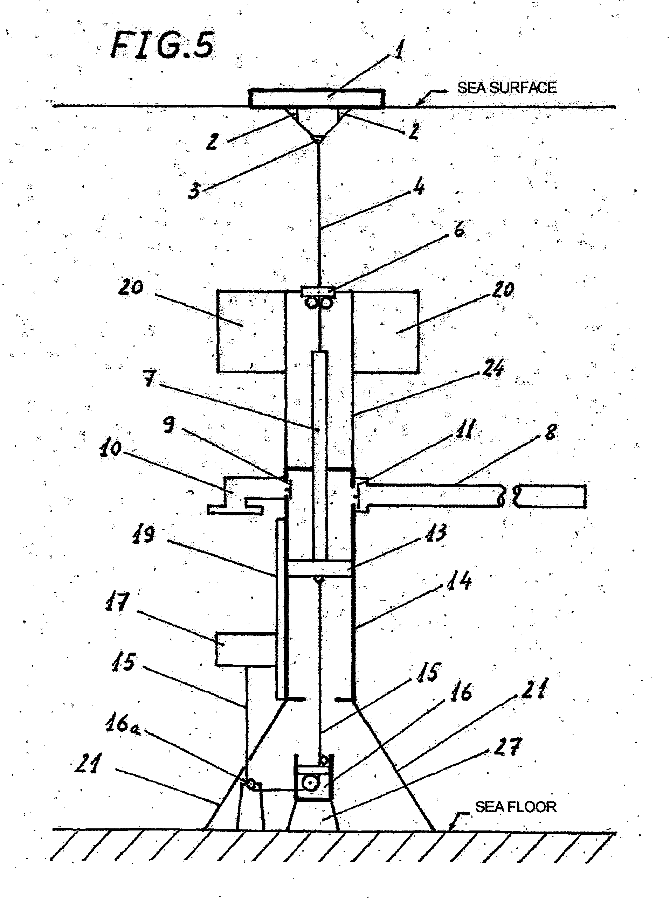

Next, figure 5 is described. It refers to another alternative to the pump in horizontal position, which is similar to said pump, but in this case the pump is placed in vertical position and the rod faces upwards. The numbers of the parts of the pump corresponds with that of figure 2. It has a float 20 attached to the structure 24, keeping the pump in vertical position since the thrust of this float functions opposite to cables 21, and keeps the pump firm on the floor. The float 20 should have enough thrust to hold the weight of the submerged pump, the downward tension of the small float 17, and the deviation caused by the current in the area.

This mechanism is simpler than the mechanism of the previous cases because cable 4 of the float moves directly towards the head of the rod 7, eliminating the rollers 5 and 22, present in previous cases. In order to force cable 4 to align with the rod, a set of rollers 6 is used, set which is formed by two horizontal and two vertical rollers, through which cable 4 passes.

The small float 17 moves along rail 19, and the cable coming out of it 15 deviates in a small pulley 16a, and in the roller 16, so that the float can pull the piston.

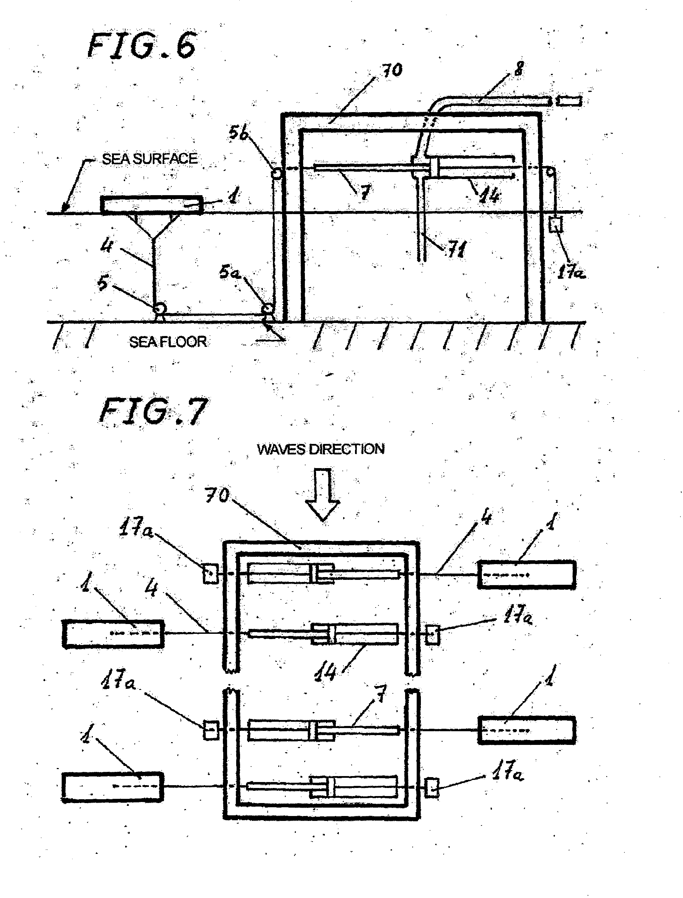

Next, figure 6 is described. It refers to an elevation view of platform 70 whose legs are fixed to the sea floor and they are high enough to stop the waves from reaching the upper part thereof. The pumps 14 are placed outside the water, on top of this structure and to a level appropriate to aspirate the sea water through pipeline 71 (the suction will take place at least 9 m from the surface of the sea). These pumps could be placed in vertical or horizontal position, where 1 is the float, 5 and 5a are rollers for the deviation of the cable, 5b is the pulley for the deviation of the cable, 7 is the rod, and 17a is the counterweight for the piston return.

Figure 7 is a plan view of figure 6. This kind of structure, which functions with the pumps outside the water, could be appropriate for shallow areas.

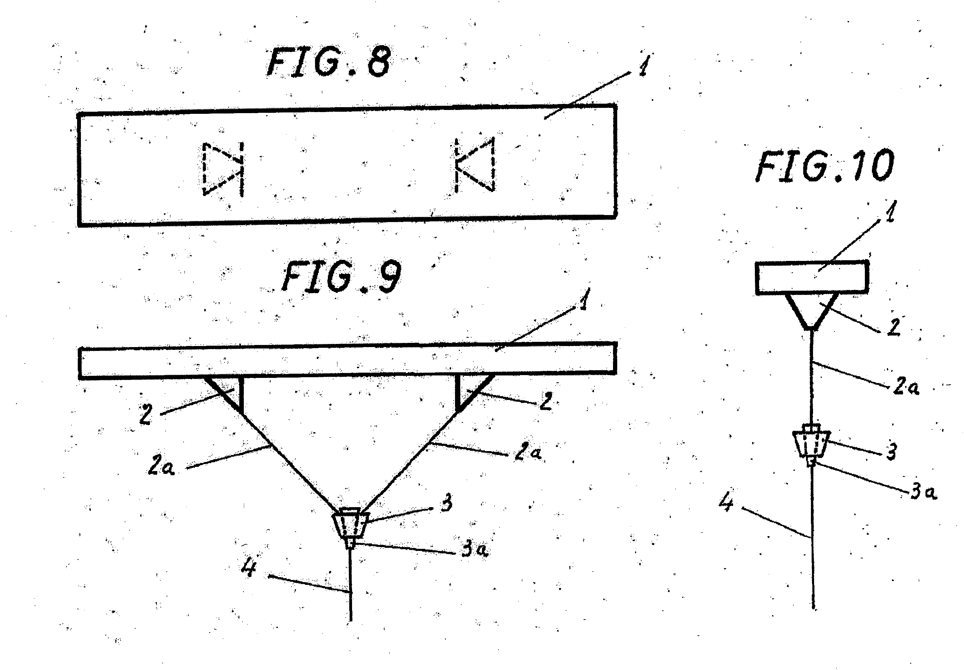

Next, figure 8 is described; it is a plan view of the float 1, which has the shape of an upright prism, with enough length, not much width or height.

Figure 9 is an elevation view of the float, in its lower part you can see two projections 2, each of them formed by two triangular sheets joined at the edge, from which cable 2a comes out. They serve to balance out the effort of the tension of cable 4 along the structure of the float, and they also prevent the float from turning with the waves. On the other hand, they work as steers, facing the waves and keeping the float parallel to them. Cables 2a keep the other end fixed to the binding piece 3.

When the cable 4 applies tension in the projections of the float, it lowers its gravitational center, increases the righting torque thus avoiding big heels in the float when the waves go trough it.

The binding piece 3 carries a rotating piece 3a inside, attached to the cable 4. This rotating piece allows the float to rotate and position itself towards the waves, without twisting the cable 4.

Figure 10 is a side elevation view of the float.

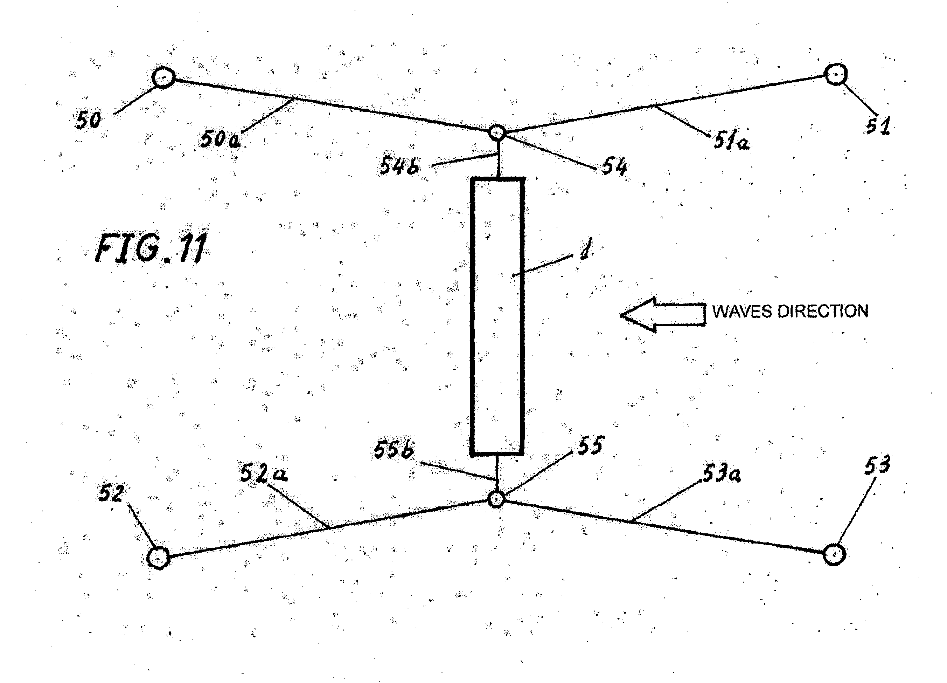

Next, figure 11 is described. It is a plan view of the float 1 with its positioning buoys. As the float is an upright prism, quite longer with respect to its width, it tends to stand perpendicular to the waves; in order to force the float to stand parallel to the waves, two buoys are used for each head of float: 50 and 51 on one end, and 52 and 53 on the other end. These buoys are separated between them and the float is at a certain distance, so that the float can rotate; they are fixed by means of a cable holding a dead weight on the floor. Besides, each buoy has its own cable: buoy 50 has cable 50a, and buoy 51 has cable 51a, said cables are joined in a counterweight 54, which at the same time is attached to the float by another cable 54b.

The buoys have an electric engine inside, isolated from the water, which can be managed from land and allows the veering and checking of cables in order to move the counterweight to the necessary position and always keep the float parallel to the waves. The float will always be aligned with counterweights 54 and 55, that is to say, parallel to the waves. The buoys have a brake system for their cables in order to hold them at the required length.

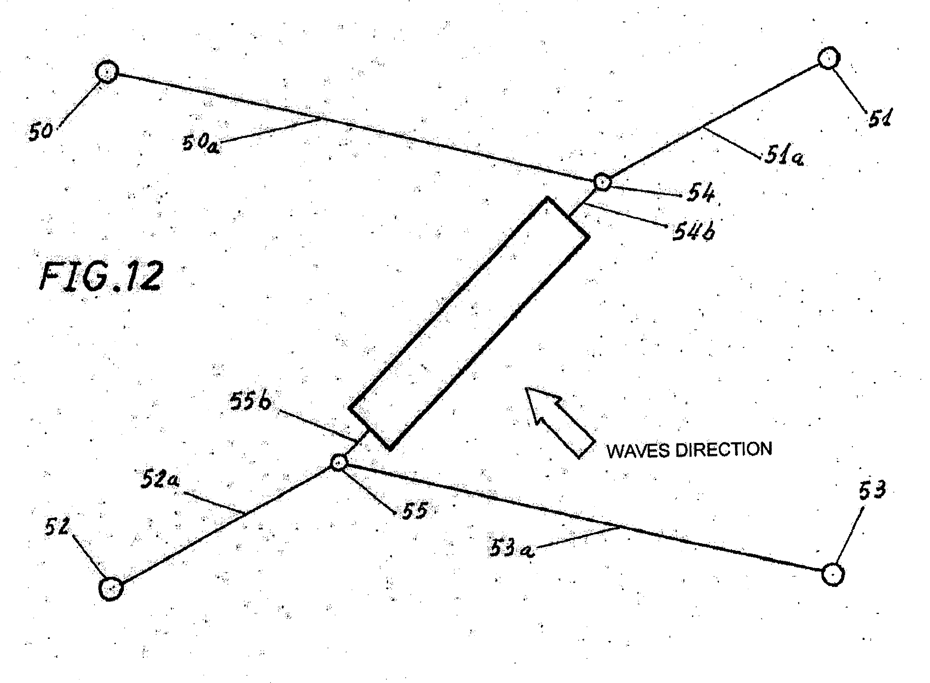

Figure 12 shows the same as figure 11, but in this case the direction of the waves turned 45 degrees and the float had to be rotated in order to keep it parallel to the waves. To achieve this aim, cables 51 a and 52a were veered, and cables 50a and 53a were checked. This figure shows the float in the direction that joins counterweights 54 and 55. The same amount of cable has to be rolled at both ends of the float, in order to keep it vertical to the roller 5.

In order to make turns superior to 45 degrees, it would be necessary to connect buoys 50 and 52 to the counterweight 55, and buoys 51 and 53 to the counterweight 54. By doing so, the float can rotate 360 degrees, although this may not be necessary as the waves usually come from certain directions depending on the winds in the area, and it is not necessary to rotate the float 360 degrees.

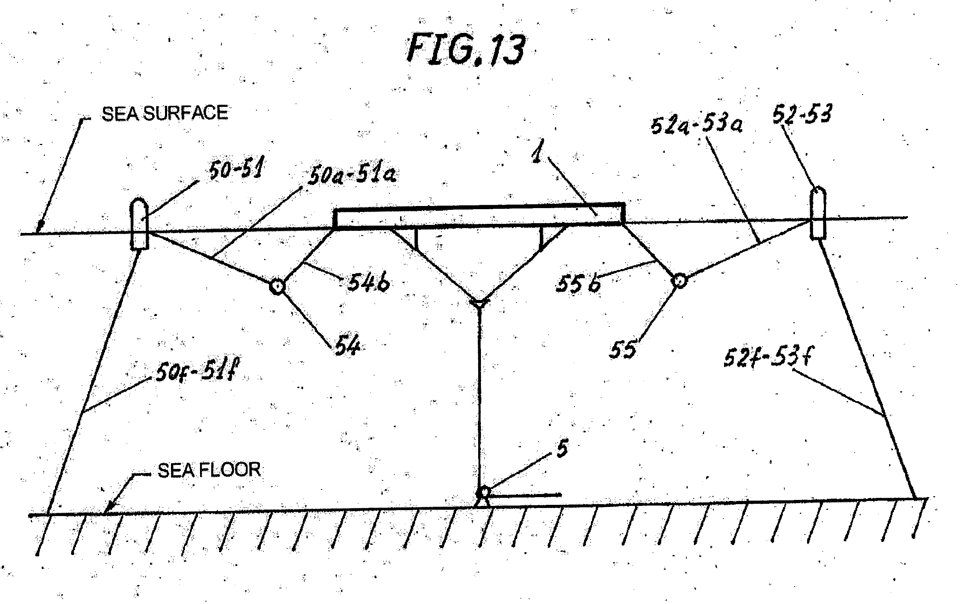

Figure 13 is an elevation view of the float, the positioning buoys, the counterweight and the cables, as well as the anchoring cables of the buoys: 50f, 51f, and 52f, 53f.

As it can be seen in the drawing, cables 50a and 51a form an angle with cable 54b, allowing the counterweight 54 to move upwards and downwards, and avoiding tension in the cables when the float and the buoys move up and down due to the effect of the waves. To control the position of the counterweights and their depth, they can be attached using a cable to a small, visible buoy.

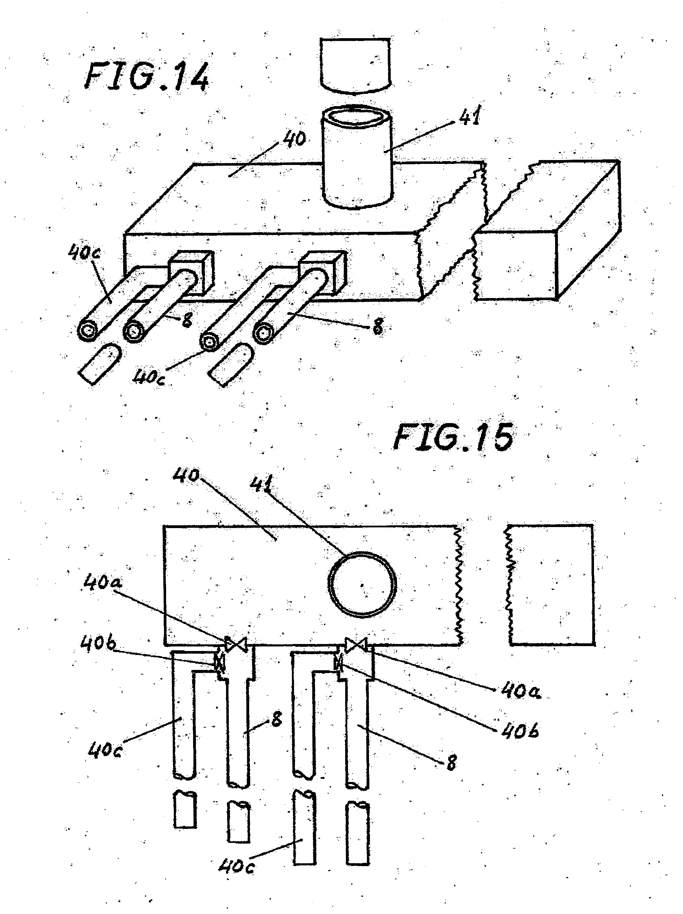

Next, figure 14 is described. It refers to a perspective view of the valve chest 40. The hoses 8 carry the water which the pumps send to land; each pump has its hose which can lie on the sea floor, or they can be placed at a certain level from it, held by floats attached to the floor with cables. The hoses can be very long.

When reaching land, the hoses can meet in one or several valve chest 40, from which one or several pipelines of a wider diameter 41 come out and carry the water to the storage deposit 42. At the entrance of the valve chest, the hoses 8 carry an open-close valve 40a, as well as another open-close valve, 45b, which acts as a channel through the hoses 40c of the same diameter as hoses 8. For example, if it is desired to close a pump due to flooding in the deposit, the valve 40b would open first, so that water comes out through the hose 40c, and later, the inlet valve 40a of the valve chest would close.

Figure 15 is a plan view of the valve chest. The tube or tubes 41 which come out of the valve chest and go into the deposit 42 should have a diameter wide enough to hold the volume of flow of all the hoses which go into the valve chest.

A possible method for cleaning the hoses would be to take advantage of the pump having stopped working, that is, when there are no waves, or disconnecting cable 4; then valve 40a would be opened and the water would come down pressurized from the deposit to the pump in the sea, and so it would clean itself; after this, it would be possible to go into the pump and clean it.

Next, storage deposit 42 is described. It is similar to a swimming pool and it collects the water all the pumps send from the sea through the valve chest 40; it has one or several entrances for pipeline 41, which comes from the valve chest, and it has two exits: one, which corresponds to pipeline 44 and controls possible floods, and another, 43, which carries the water from the deposit to the turbine 45.

The capacity the deposit should have is supposed to be enough to hold half or less of the volume of flow the turbine consumes in one hour. This flow would function as a security reserve in case there is a difference in the phases of the pumps due to the waves. The volume of flow coming out of the deposit trough pipeline 43 per second is the same as the one going into the deposit trough pipeline 41 per second.

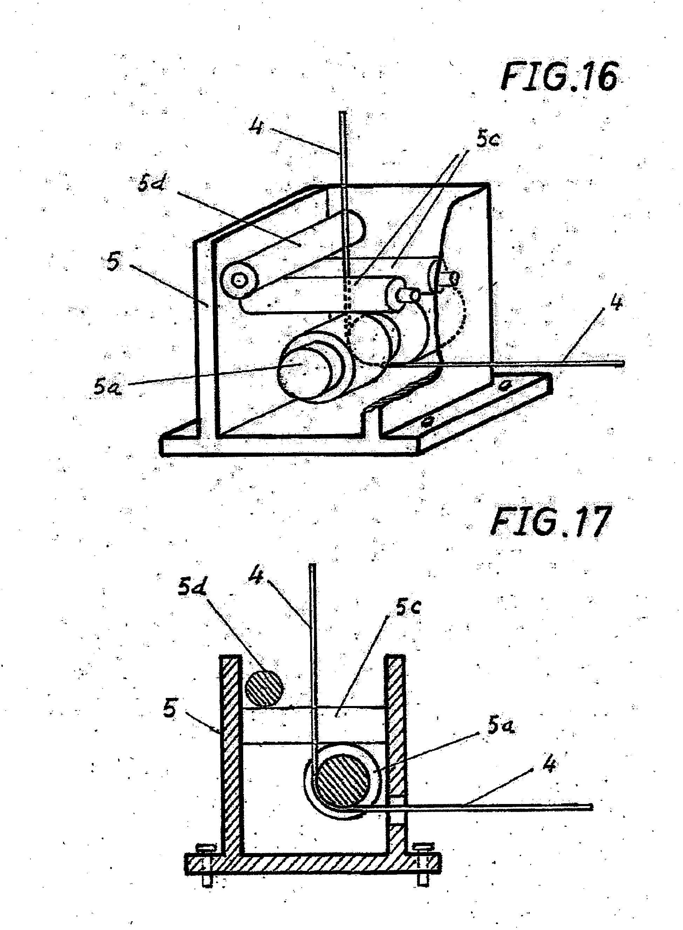

However, in the case of very high waves, if the pumps are prepared for the piston to have a longer stroke, the volume of flow would be larger, and the capacity of the deposit should be increased. Next, figure 16 is described. It refers to a perspective view of the roller 5, with a broken-out section; it has to be resistant enough to hold the tension of the cable 4, and it should be built with a corrosion-resistant material. Its function is to divert the cable 4, which comes down from the float, and turn it into a horizontal position moving towards the head of the rod. It consists of four rollers crossed in right angle between them so that if the cable 4 diverts a little from the vertical due to the force of the waves, the current or because the float rotates to go in the direction of the waves, it will never go outside the main roller 5a. This roller is not cylindrical but concave so that the cable always functions centered on it. The rollers 5c are apart from each other, in the same way as the roller 5d is slightly separated from vertical of 5a as it can be seen in the figure. In this way, when cable 4 is working a little bit deviated from the vertical, the excessive tension in the secondary rollers is avoided.

The base of the roller 5 is fixed with studs or welded to the pillar 23, firm on the floor base.
Figure 17 shows a frontal view of the roller 5, with a cross section in the middle of the roller 5a.

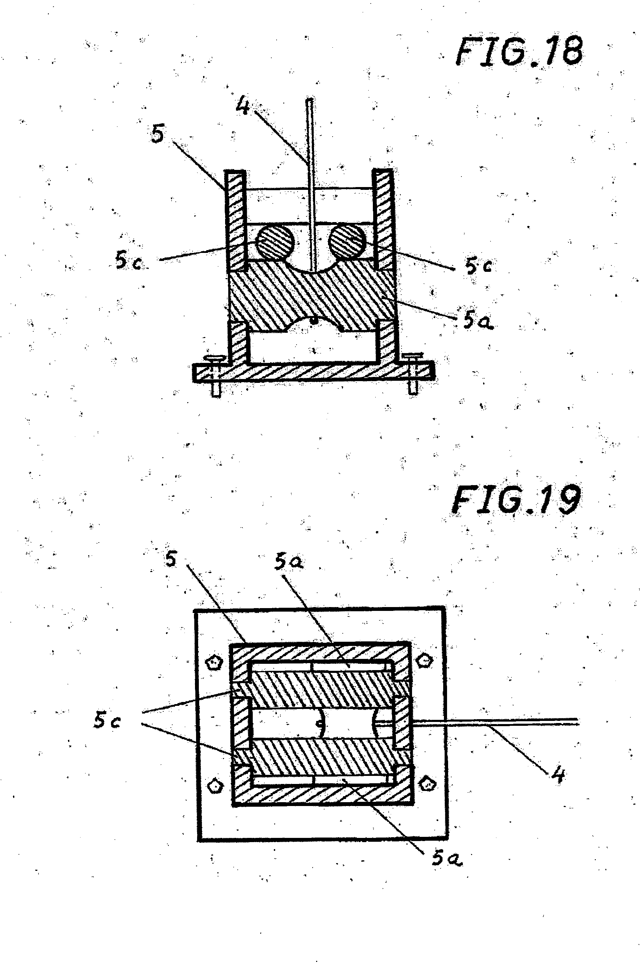

Figure 18 shows a right side view of the roller 5, with a longitudinal section in the middle of the roller 5a.

Figure 19 shows a plan view of the roller 5, with a longitudinal section in the middle of the rollers 5c.

Next, the roller 22 is described. This roller is used in vertical pumps which have the rod facing down. It is identical to the roller 5 and equally resistant, but in this case the interior rollers are not separated between them, and cable 4 is adjusted to them.

Next, the roller 16 is described, which deviates the cable 15 so that it can bring the piston back to the beginning of its stroke; it is similar to the roller 22 but less resistant, as it holds less tension.

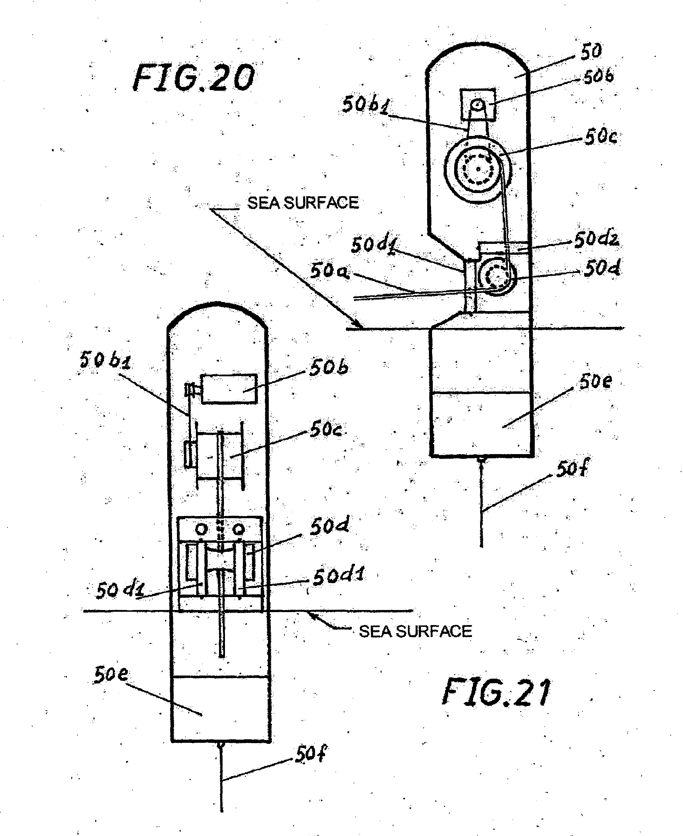

Next, figure 20 is described. It refers to a side view of a positioning buoy, in this case positioning buoy 50. These buoys always position the float parallel to the waves in order to take full advantage of their propulsion. Each buoy has a cable, 50a, which reaches the counterweight 54 and should have the capacity to veer, heave back and stop, in order to do so, the buoys have an electric engine (50b) operated from land, or, it could have a built-in system by means of which they can automatically position the float. The buoys will also have a system to stop and hold cable 50a at a certain length.

The cable 50a is deviated by roller the $50_d$ and, in order to prevent the cable from getting out, there are two vertical rollers, $50_{d1}$, and two longitudinal rollers, $50_{d2}$ which are separated so that the cable is loaded in the reel $50_c$, as it can be seen in the drawing. Once the cable is deviated, it is rolled in the reel $50_b$, which is moved by the electric engine $50_c$ by a drive chain $50_{b1}$.

The lower part of the buoy has a dead weight ($50_e$) for the sake of stability, and it is fixed to the floor by a cable $50_f$.

Figure 21 is an elevation view of the buoy; although it has a wide opening to let the cable function freely, the sea water never goes inside the upper part, where the electric engine is placed. For this reason, even if the waves completely cover the buoy, as it is closed in the upper part, air counterpressure is caused and the water cannot go up. Said opening should be wide enough to air the buoy and eliminate humidity inside it.

There should be no inconveniences when the cable is unrolled in the reel, since the weight of the cable plus the tension of the counterweight pull it and help it unroll. In order to make this easier, a cable with some extra weight could be added.

The buoy should float easily, because when there are high waves, the float is on the crest and the buoy is on the trough or vice versa, it is possible to tighten the cable 50a by pulling more than half the weight of the counterweight, as there are two buoys for each counterweight.

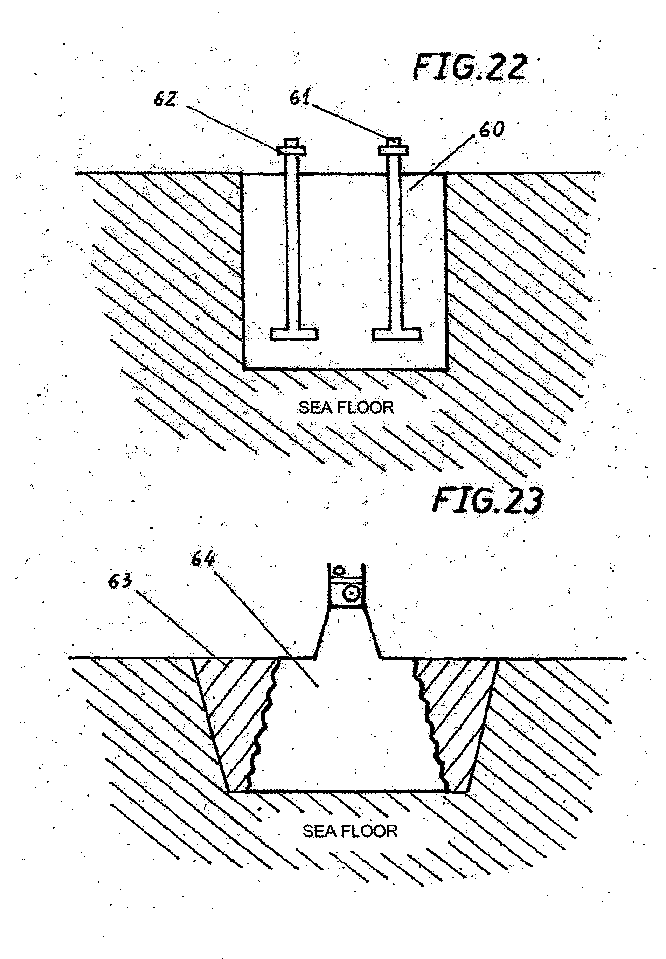

Next, figure 22 is described. It refers to base 60, which lies on the sea floor to strengthen the supports 18 of the pumps in horizontal position, the supports 23, 26, 27 of the rollers, and cables 21 which keep the pumps in vertical position. These supports are attached to fixing studs 61 of the bases, by means of nuts 62.

In order to assemble the base, we would have to make a hole in the sea floor and fill it with cast reinforced concrete up to the bottom level in which the fixing rods which will support the pillars of the rollers, the pumps and the cables would be inserted. Once the pillars are fixed, the hole is filled again with sand or mud, to the level of the sea floor.

Next, figure 23 is described. It refers to precast work 64, built in a shipyard, which is formed by the base, the supporting pillar and the roller which would be placed inside the hole in the floor; once the hole is settled, it is filled with sand of mud 63 to the level of the sea floor.

The base is **characterized in that** it is inserted in the sea floor, in this way the sand or mud pressure exerted on the sides functions as pliers, offering resistance to its release. For example, in a base formed by a square block of concrete, 4-meter-corrugated sides, and 30 m deep, with a pressure of 3,075 Kg/cm$^2$ and with a friction rate between the base and the sand of $\mu = 0.3$, the result would be:

$$S_{\text{surface of a lateral side of the block}} = 160000 \text{ cm}^2$$

$$P_{\text{pressure exerted on one side}} = P \times S = 492000 \text{ Kgf} = 492 \text{ Tmf}$$

$$F_{\text{friction force}} = \mu \cdot n = 0.3 \times 492 = 147.6 \text{ Tmf}$$

As there are four sides, the result would be:

$$147{,}6 \times 4 = 590{,}4 \text{ Tmf}$$

This, added to the weight of the submerged block, would function as the base resistance to being lifted, which is more than enough to hold the upward tension of the cable of a float of 31 m long, 6 m wide and 1,648 m high, on top of the roller 5.

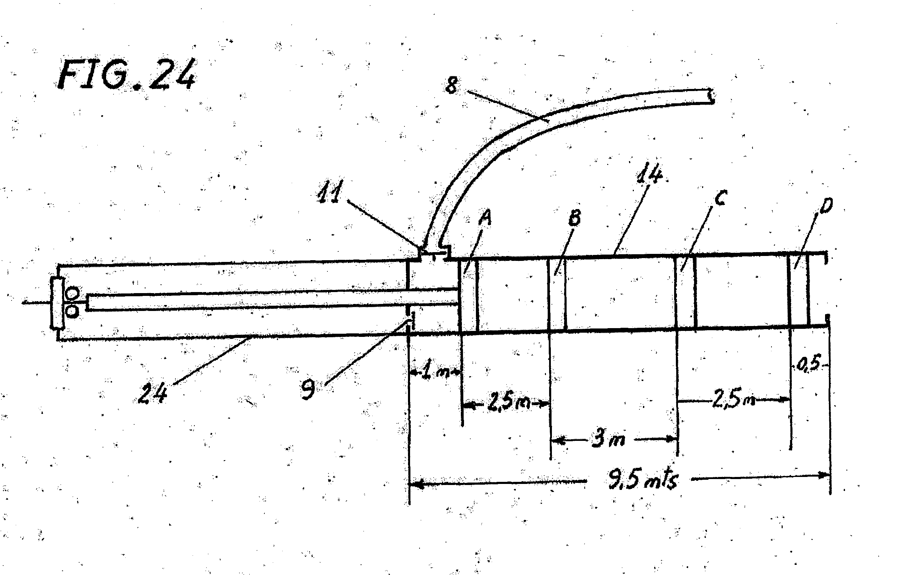

Next, figure 24 is described. It shows an elevation view of a pump and its measures, in a possible application to a real case. The maximum stroke allowed for the piston will be 5 m; therefore, a stop will be necessary.

This figure shows a 1m-long area on the left; which corresponds to the chamber where the admission and expulsion valves 9 and 11 are located.

Position B of the piston corresponds to the highest spring tide with a calm sea.

Position A is the position of the piston when the float is on the crest, 6 m high, and 2.5 m separated from B; this is the maximum position the piston can reach to the left.

Position C of the piston corresponds to the lowest spring tide with a calm sea.

Position D is the position of the piston when the float is on the base of the 6 m high wave, and is 2.5 m separated from C; this is the maximum position the piston can reach to the right.

Between positions B and C there is a 3 m distance which corresponds to the maximum difference between the highest spring tide and the lowest spring tide of the area.

If a small space is left 0.5 m long to the right of D, the total length of the pump without the rod will be 9.5 m.

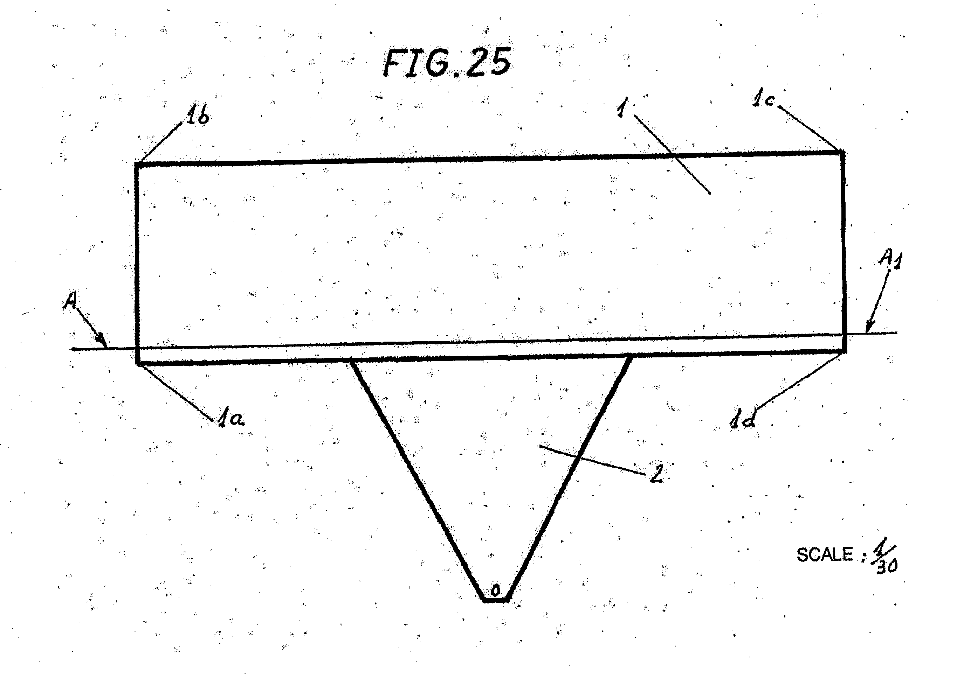

Next, figure 25 is described. It shows a side view of a float on sea level with the measures on a 1/30 scale, and refers to a possible application to a real case.
Wherein:

A - A1 is the line of the sea surface.
1a - 1b: Equal to 1,648 m, it is the highest altitude of the float.
AA1 - 1a: Equal to 0.148, it is the immersion of the float due to its weight and all the forces which pull down when the sea is calm.
AA1 - 1b.: Equal to 1.50 m., which is the part of the float seen outside the surface of the sea.

The cables $2_a$ come out from the vertex of the projection 2 in the lower part of the float, this vertex is separated from the float 2 m in the vertical.

The float is 31 m long.

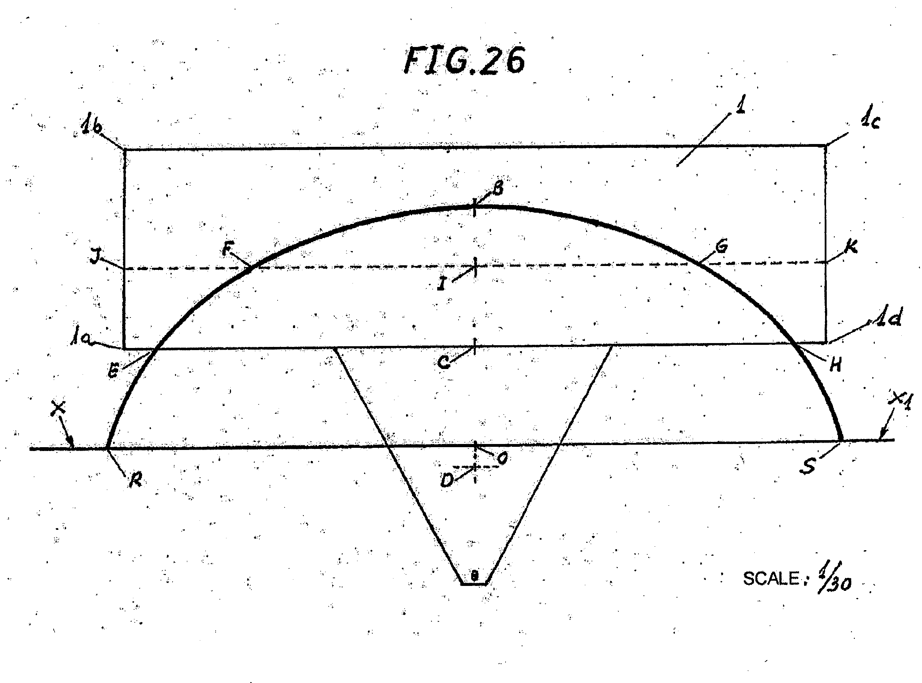

Next, figure 26 is described. It shows a side view of the profile of a 2-meter wave, or the surface of an orthocycloid generated by a circumference with a 1-meter ratio; to which the side profile of the float has been superimposed when this is shifted 1 mt over the wave trough.

It refers to a possible application to a real case, with its measures on a 1/30 scale.
Wherein:

X - X1 is the line corresponding to the wave trough.
R - S is the length of the 6.28 m orthocycloid.
O - B is the height of the wave or vertical distance between the base of the wave and its crest, equal to 2 m.
$1_a$, $1_b$, $1_c$, $1_d$ is the side profile of the float.
D - O is the immersion of the float.
D - C is the vertical distance within which the float moves inside the wave, dragging the piston, equal to 1 meter.
C is the minimum immersion the float needs to move the piston.

For the float to move the piston, it is necessary that surfaces $1_a$, J, K, $1_d$ are submerged; however, we observe that when the float has moved 1 meter on the crest of the wave, surfaces E, $1_a$, J, F, and H, G, K, $1_d$ are not covered by the wave, and therefore, they do not produce any drive. On the other hand, we verify that the surface F, B, G is covered by the wave and it is bigger than the sum of the previous two. Therefore, if we multiply surface E, B, H by the length of the float, 31 m, we verify that the float has enough drive to rise 1 meter within the wave, forcing the piston to have a stroke of 1 meter.

## DESCRIPTION OF A POSSIBLE APPLICATION TO A REAL CASE

For this case, we use the measures given in figures 24, 25, 26 and also the following:

100 m = height at which the deposit 42 is located with respect to the turbine 45.
0.15 m = Ratio of the pipeline 43, which extends from the deposit to the turbine.
31 m = Length of the float.
6 m = Width or breath of the float.
1,648 m = Height of the float.
0.5 m = Ratio of the piston of the pump.
5 m = Maximum stroke of the piston of the pump.
8.5 m = Length of the cylinder of the pump.
1 m = Length of the chamber of the pump.
3 Tm = Weight of each one of the counterweights 54 and 55 of the float and the positioning buoys.
1 Tm = Weight of the cable 4, plus the friction in the rollers.
7.54 Tmf = The tension with which float 17 pulls the piston.

Next, there are described some of the approximate calculations which are necessary to calculate the size of the float in relation to the ratio of the pump piston, the number of pumps which would have to be assembled and the flow needed to feed the turbine, etc.

1. In this section we describe the calculation of the flow needed to feed the turbine:

a. The speed of the water when going into the turbine.

$$v = \sqrt{2.g.h} = \sqrt{2x9.8x100} = 44.27 \text{ m/sec}$$

Wherein:

H =100 m, it is the level of the deposit above the turbine.
b. The consumption or flow in the turbine will be:

$$C_{consumption} = 0.6 \times S_{surface\ pipeline} \times \sqrt{2.g.h}$$

$$C_{consumption} = 0.6 x \pi x15^2 x \sqrt{2x980x10000} = 1876.69 \text{ liters / sec} = 1.87 \text{m}^3 \text{/ sec.}$$

Wherein:

R = 0,15 m, it is the ratio of the pipeline which goes into the turbine.
In an hour, the consumption will be:

$$3600 \text{ sec x } 1.87 \text{ m}^3\text{/sec} = 6732 \text{m}^3 \text{/ hour.}$$

2. In this section we describe the calculations of the pressure the water exerts on the pump piston on the sea floor.

a. If we consider that the turbine hangs at sea level, and the water in the deposit is 100 m above it, it will be:

h = 100m
$w_0$ = 1,025 the specific weight of the sea water.
Wherein:

$$P_{pressure} = h \times w_0 = 10000 \times 1,025 = 10,25 \text{ Kg / cm}^2.$$

Note:
The pressure produced in the pump piston in altitude is the same pressure the piston would have if the pump were at sea level. In this case, the pressure at sea level is 10.25 kg / $cm^2$, and the pressure in the pump on the sea floor will also be 10.25 kg /$cm^2$. The pressure, caused by the altitude of the water 100 m above sea level, acts on the interior' side of the piston; and the pressure caused by the depth acts on the exterior side of the piston, balancing each other.

b. The pressure the surface of the pump piston supports on the sea floor will be:

$$F_{force} = P_{pressure} \times S_{piston\ surface}$$

$$S_{piston\ surface} = \pi \times r^2 = 3.14 \times 50^2 = 7850\ cm^2$$

$$F = P \times S = 10.25 \times 7850 = 80462.5\ Kgf = 80.46\ Tmf$$

Wherein:

R = 0.50 m is the ratio of the piston pump.

Note:

The calculation of the force exerted on the piston did not include the space of the rod inside the cylinder.

3. In this section we describe the calculation the maximum drive the float should have in order to move the pump piston, and its length.

a. If we consider that the profile of the 2-meter-wave is a 1-meter-ratio orthocycloid, as shown in figure 25, this curve has a length equal to:

$$L = 2 . \pi . r = 2 \times 3.14 \times 1 = 6.28\ m$$

We also observe that if 6 m wide and 0.5 m high a float is on the base of the curve, it is practically inside it. Therefore, the measures chosen for the float are 6 m wide and 0.5 m high.

| | |
|---|---:|
| Then, taking into account the different forces exerted on the float, it can be deduced: Pressure supported by the surface of the pump piston on the sea floor, with a R = 0.50 m: | **80.46 Tmf** |
| Downward pressure exerted by the float, which brings the piston back to the beginning of its stroke: | **7.54 Tmf** |
| Weight of the cable which hangs from the float plus the friction in the rollers: | **1.00 Tmf** |
| Weight produced by the counterweight and the cables of the positioning buoys which position the float towards the waves: | **6.00 Tm** |
| Minimum thrust of the float to move the piston: | **95.00 Tm** |

b. The length the float should have in order to achieve that minimum drive will be:

a = 6 m, it is the width of the float.

a = 0.5 m, it is the height of the float.

$w_0$ = 1,025 it is the specific weight of the sea water.

$$Minimum\ T_{hrust\ of\ the\ float} = a \times b \times L \times w_0$$

$$L = \frac{T}{a \times b \times W_0} = \frac{95}{6 \times 0.5 \times 1.025} = 31\ mt$$

4. In this section we describe the calculations of the total weight of the float, and the immersion produced in it due to the different pressures exerted.

a. If we consider that:
2.5 mm = Thickness of the float sheet.
7.85 = Specific weight of the steel sheet of the float.
493.96 $m^2$ = Total surface of the float sheet.

$$V_{\text{volume of the sheet}} = S_{\text{surface of the sheet}} \times \text{Thickness of the sheet}$$

$$V = 493.96 \times 0.0025 = 1{,}235\ m^3$$

$$W_{\text{weight sheet}} = V_{\text{volume of the sheet}} \times W_{0\ \text{of the sheet}} = 1{,}235 \times 7.85 = 9.69\ Tm.$$

Wherein:

| | |
|---|---|
| Weight of the exterior sheet of the float | 9.69 Tm |
| Weight of the interior reinforcements of the float, plus its projection and the anchors | 4.00 Tm |
| Total weight of the dry float | 13.69 Tm |

b. The immersion of the float is produced by the sum of all the intervening pressures; namely:

| | |
|---|---|
| Total weight of the dry float | 13.69 Tm |
| Downward pressure exerted by the float, which brings the piston bak to the beginning of its stroke | 7.54 Tm |
| Weight of the cable which hangs from the float plus the friction in the rollers | 1.00 Tm |
| Weight produced by the counterweight and the cables of the positioning buoys which position the float towards the waves | 6.00 Tm |
| Total weight | 28.23 Tm |

Wherein:

$$W_{\text{weight}} = V_{\text{volume}} \times W_0$$

$$V = \frac{P}{w0} = \frac{28.23}{1{,}025} = 27.54$$

$$V_{volume} = a \times b \times L$$

$$b = \frac{V}{axL} = \frac{27.54}{6x31} = 0.148 mts$$

The result is an immersion of 0.148 m.

5. In this section there are described the calculations of the weight of the float when it is on the crest of the wave, or moved 1 meter vertically inside it.

From figure 26, it is deduced:

| | |
|---|---|
| Total volume of the float sheet | **1.235 m³** |
| Volume of the sheet on wet surface | **0.0211 m³** |
| Volume of the float sheet without its wet surface | **1.2139 m³** |
| Weight of the float sheet without wet surface: | |
| $p = V \times w_0 = 1.2139 \times 7.85 =$ | **9.529 Tm** |
| Weight of the sheet of the float on wet surface: | |
| $p = V \times w_0 = 0.0211 \times 7.85 =$ | **0.144 Tm** |
| Weight of the exterior float sheet when it is on the crest of the wave | **9.673 Tm** |
| Therefore: | |
| Total weight of the exterior sheet of the float when it is on the crest of the wave | **9.673 Tm** |
| Weight of the interior reinforcements of the float, plus the projection on the lower part. | **4.00 Tm** |
| Weight of the cable which hangs from the float | |
| plus the friction in the rollers | **1.00 Tm** |
| Downward pressure exerted by the float, which brings the piston back to the beginning of its stroke | **7.54 Tm** |
| Weight produced by the counterweight and the cables of the positioning buoys keeping the float towards the waves | **6.00 Tm** |
| Total weight of the float when it is on the crest of the wave | **28.213 Tm** |

6. In this section, there are described the calculations of the floating capacity or thrust the float has when it is on the crest of the wave, or has moved 1 m vertically inside it.

From figure 26 it is deduced that the wet surface of float E, B, H inside the wave equals 4.22 m². That is to say, the volume of the wet surface will be:

$$V = S_{surface} \times L = 4.22 \times 31 = 130.82 \text{ m}^3$$

Then:
The thrust of the float on the crest of the wave will be:

$$E = V \times w_0 = 130.82 \times 1,025 = 134.09 \text{ Tm}$$

Wherein:

| | |
|---|---|
| Thrust of the float on the crest of the wave | **134.09 Tm** |
| Weight of the float on the crest of the wave | (-) **28.213 Tm** |

(continued)

| Force needed to move the pump piston | (-) **80.46 Tm** |
|---|---|
| Floating capacity on the crest of the wave | **25.417 Tm** |

This means that after moving the pump piston 1 m inside the cylinder, the float still has 25.417 Tm of remaining force.

7. In this section there are described the calculations of the maximum drive the float has when it is completely submerged.

The measures of the float are:

Height = 1,648 m
Width = 6.00 m
Length = 31.00 m

Therefore, the volume will be:

$$V = a \times b \times L = 1{,}648 \times 6.00 \times 31.00 = 306{,}528 \ m^3$$

And the thrust will be:

$$E = V \times w_0 = 306{,}528 \times 1{,}025 = 314.19 \ Tm$$

Taking into account the other forces exerted on the float:

| | |
|---|---|
| Thrust of the submerged float | .**314.19 Tm** |
| Downward pressure exerted by the float, which brings the piston back to the beginning of its stroke | **(-) 7.54 Tm** |
| Weight of the cable which hangs from the float plus the friction in the rollers | **(-) 1.00 Tm** |
| Weight produced by the counterweight and the cables of the positioning buoys, keeping the float towards the waves | **(-) 6.00 Tm** |
| Maximum final thrust of the submerged float | **299.65 Tm** |

This means that by placing a stop, the piston has a maximum stroke of 5 m (which occurs with 6-meter-high waves). In the case of waves higher than 6 m, the float will be completely submerged; the cable of the float and the deviating rollers will have to support a tension of 299.65 Tm.

8. In this section there are described the calculations for the flow produced by the pump on the sea floor, whose piston has a ratio of R = 0.50 m, when facing different waves.

a. When dealing with 2-meter-high waves (which is the height used for the calculations in a possible application to a real case we are dealing with), the stroke of the piston is at least 1 m.

Therefore:

If the stroke is 1 m, the volume of the water inside the cylinder will be:

$$V = \pi \times r^2 \times L = 3.14 \times 0.50^2 \times 1 = 0.7850 \ m^3$$

As the 2-meter waves last 10 seconds, it is deduced:

If every 10 seconds…………….... it pumps 0.7850 m$^3$

In one hour (3,600 seconds)…… it pumps    X        $\Big\}$   X = 282.6 m$^3$/hour

That is to say, in one hour, a pump pumps 282.6 m$^3$. The consumption in the turbine is 6732m$^3$/ hour. The number of pumps needed to achieve that will be:

$$\frac{6732}{282.6} = 23.82 \approx 24\,pumps$$

Therefore, 24 functioning pumps are needed to feed the pipeline which has a 0.15 m ratio and carries the water to the turbine.

b. In the case of 3-meter-high waves, the piston stroke will be at least 2 m

Therefore:

$$V_{water} = \pi \times r^2 \times L = 3.14 \times 0.50^2 \times 2 = 1.57 \text{ m}^3$$

Every 10 seconds………………………. it pumps 1.57 $^3$

In one hour (3,600 seconds)………….... it pumps   X      $\Big\}$   X = 565.2 m$^3$/hour

Therefore, the flow pumped in one hour by the 24 pumps will be:

565.2 m$^3$/hour x 24 pumps = 13,564.8 m$^3$/hour.

As the consumption in the turbine is 6732m$^3$/ hour, we deduct:

$$\frac{13,564.8}{6732} = 2,015$$

This means that 3-meter-high waves can feed two pipelines of R = 0.15 m, which carry the water to the turbine; which means that two turbines can function.

c. In the case of 4-meter-high waves, the stroke of the piston will be at least 3 m.

d. In the case of 5-meter-high waves, the stroke of the piston will be at least 4 m.

e. In the case of 6-meter-high waves, the stroke of the piston will be at least 5 m, (in the possible application to a real case we are dealing with, 5 m is the maximum stroke the piston can have, so a stop will have to be used).

As the 6-meter-high waves last 14 seconds, it is deduced that:

$$V_{water} = \pi \times r^2 \times L = 3.14 \times 0.50^2 \times 5 = 3.925 \text{ m}^3$$

Every 14 seconds ................. it pumps 3.925 m$^3$

In 1 hour (3,600 seconds) ........... it pumps    X

$\Big\}$  X = 1,009.3 m$^3$/hour

In one hour, the 24 pumps installed will pump:

$$1{,}009.3 \text{ m}^3/\text{hour} \times 24 \text{ pumps} = 24{,}223.2 \text{ m}^3/\text{hour}.$$

As the consumption in the turbine is 6,732 m$^3$/ hour, it is deduced:

$$\frac{24{,}223.2}{6{,}732} = 3.60$$

This means that with 6-meter-high waves three turbines can be fed and there is still remaining water.

9. In this section there are described the calculations of the force exerted by the water coming out of the turbine; being the ratio of the inlet pipeline R = 0.15 m, plus the watts it generates.

   a. The height of the deposit over the level of the turbine is 100 m; therefore:

   h = 100 m
   w = 1,025 is the specific weight of the sea water.
   Therefore, the pressure at turbine level will be:

$$P_{pressure} = h \times w_0 = 10{,}000 \text{ cm} \times 1{,}025 = 10{,}250 \text{ gr/cm}^2 = 10.25 \text{ kg/cm}^2$$

$$S_{pipeline\ surface} = \pi \times r^2 = 3.14 \times 15^2 = 706.5 \text{ cm}^2$$

$$F_{force\ of\ water\ pressure\ in\ the\ turbine} = 10.25 \times 706.5 = 7{,}241.62 \text{ kgf}$$

b. The speed of the water when going into the turbine is:

$$v = \sqrt{2xgxh} = \sqrt{2x9.8x100} = 44.27 \text{ m/sec.}$$

c. The kinetic energy of the water when going into the turbine shall be:

7241,6 kg, which is the weight of the water inside the pipeline feeding the turbine.

$$E_{kinetic\ energy} = 1/2 \times m \times v^2 = 1/2 \times \frac{7241.6}{9.8} \times 44{,}27^2 = 724{,}098.28\ kgm$$

Therefore, the total force the water exerts on the turbine will equal the force of the pressure plus the kinetic energy; that is:

$$F = P + E_c = 7{,}241.62 + 724{,}098.28 = 731{,}339.9\ kgf$$

Translated to watts:

$$731{,}339.9 \times 9{,}81 = 7174444{,}4\ watts/sec = 7{,}174.4\ kw/sec$$

$$7{,}174.4\ kw/sec \times 3{,}600\ sec = 25{,}827{,}840\ kw/hour = 25.83\ Gw/hour.$$

Therefore, it is deduced that it is possible to obtain a production of 25.83 Gw/hour with 2-meter-high waves; 24 pumps with pistons ratio of a 0.50 m; 24 floats 31 m long, 6 m wide and 1,648 high; and a 100-meter-high deposit with respect to the turbine it sends water to by means of a pipeline of a 0.15 m

## Claims

1. Functioning of a hydroelectric power plant driven by ocean waves force, comprising a number of floats (1) similar to upright prisms, very long with respect to their width and length, which go up and down vertically due to the two-directional movement of the waves, inside each float there is a cable (4) fixed to its lower part, which goes down vertically to a roller (5), fixed on the sea floor, which changes the direction of the cable so that it can be positioned horizontally until it is fixed to the head of a rod (7), which pulls the piston (13) of a lift and force pump, horizontally fixed on the sea floor. Said pump carries an admission valve (9) through which the water goes in when the piston goes back in its stroke pushed by the float (17), and an expulsion valve (11) through which the water comes out due to the pressure exerted by the piston in its stroke, moved by the float; water which is sent through a hose (8) which joins the pump and the deposit, which is **characterized by** the fact of being placed on land, in great altitude, and having little water storage capacity. The water from the deposit comes down through a pipe to a turbine (45) placed almost at sea level, which, when rotating, moves a generator which in turn produces electricity.

2. Functioning of a hydroelectric power plant driven by means ocean waves force, according to claim 1, **characterized in that** it is an alternative to the pump in horizontal position, being similar to it in every aspect, except **in that** the pump stands in vertical position, with the rod facing downwards, therefore, a float (20) is attached to it to keep it vertical, and a number of cables (21) keep it fixed to the sea floor. The cable (4) of the float is diverted with the rollers (5 and 22), and the float for the piston return (17) is placed inside a rail (19) and does not need to divert its cable.

3. Functioning of a hydroelectric power plant driven by ocean waves force, according to claim 1, **characterized in that** it is an alternative to the pump in horizontal position, being similar to it in every aspect, except **in that** the pump stands in vertical position, with the rod facing downwards; therefore, it has a series of built-in pillars (30) to keep it fixed to the sea floor, and the cable of the float turns with the rollers (5 and 22); the float (17) for the piston return is placed inside a rail (19) and does not need to deviate its cable.

4. Functioning of a hydroelectric power plant driven by ocean waves force, according to claim 1, **characterized in that** it is an alternative to the pump in horizontal position, being similar to it in every aspect, except **in that** the pump stands in vertical position, with the rod facing upwards; therefore, a float (20) is attached to it in order to keep it in vertical position, and a number of cables (21) keep it firm to the sea floor. The cable (4) of the float goes directly to the head of rod and does not need rollers to divert it. The float (17) for the piston return is placed inside a rail (19) and its cable goes through the rollers (16a and 16).

**5.** Functioning of a hydroelectric power plant driven by ocean waves force, according to claim 1, **characterized in that** it is an alternative to the pump in horizontal position, being similar to it in every aspect, except **in that** the pumps are placed outside the water, installed on a platform (70) whose legs are attached to the sea floor. It is appropriate for shallow areas in the sea.

**6.** Functioning of a hydroelectric power plant driven by ocean waves force, according to claim 1, **characterized in that**, in order to position the float, which is similar to an upright prism, quite long with respect to its width, towards the waves, a positioning system is used, consisting of placing a counterweight for each head of the float, being said counterweight 54 and 55. Each counterweight is joined to the float and two buoys by means of cables; the buoys have an electric engine which allows them to veer, heave back and stop their cable, so that the position of the counterweight can be changed and the float can thus be rotated.

**7.** Functioning of a hydroelectric power plant driven by ocean waves force, according to claim 1, and **characterized in that** the system can be adapted and used with low waves, although in this case, as each pump would pump less water, the number of pumps and floats would have to be increased for the system to have an acceptable performance.

**8.** Functioning of a hydroelectric power plant driven by ocean waves force, according to claim 1, **characterized in that** the floats (1) could have a cylindrical shape and reduced height, but as they would have less drive, a larger number of floats would be necessary, as well as a larger number of pumps in order to achieve the same performance as that obtained using floats with the shape of straight prisms. They would offer the advantage of always being positioned towards the waves, and the installation of the positioning buoys would be eliminated.

**9.** Functioning of a hydroelectric power plant driven by ocean waves force, according to claim 1, and **characterized in that** it would be possible to have a self-cleaning system for the filter (10) of the pump, placed at the entrance of the admission valve. For example, the movement of the float (17) could be transmitted to a self-cleaning system by means of a cable, or it could have a filter cleaning system, independent from the pump, moved by an engine using current from land.

**10.** Functioning of a hydroelectric power plant driven by ocean waves force, according to claim 1, and **characterized in that** the storage deposit (42) is placed on land, in great altitude and does not need a large water storage capacity because when the system is working, the flow going into the deposit is the same as the flow simultaneously going out from the deposit to the turbine.

**11.** Functioning of a hydroelectric power plant driven by ocean waves force, according to claim 1, and **characterized in that** the concrete base (60) or (64), which has to be built on the sea floor or shipyard, to fix the pump anchors, the rollers and the cables, is inserted in a hole on the sea floor; and this hole is filled with sand or mud afterwards. In this way, the pressure exerted by the sand or mud on the sides, plus the friction between both, acts as pliers offering resistance to any vertical movement.

**12.** Functioning of a hydroelectric power plant driven by ocean waves force, according to claim 1, and **characterized in that** the performance of the plant should be acceptable because when there is wind, waves are produced, and when the wind stops, the waves remain for some time, depending on the fetch and how long it lasts. Besides, there are extended sea waves, which can come from far away areas. Also, the consumption of electricity increases in winter, and it is also in winter that there are more waves, which are also higher.

**13.** Functioning of a hydroelectric power plant driven by ocean waves force, according to claim 1, and **characterized in that** the deposit in great altitude, as well as all the pipelines going in and out of it could be located underground and they would not have a negative environmental impact, and, by locating the deposit underground, there would not be any water spill, even in the event of an earthquake.

**14.** Functioning of a hydroelectric power plant driven by ocean waves force, according to claim 1, **characterized in that** it is possible to take advantage of small islands or islets, with certain elevation and good swell to install this kind of power plants. Then, with the use of a submarine cable, the electricity could be taken to the nearest shore.

15. **Characterized in that** this kind of pumps can be used exclusively for other purposes, such as pumping water for a seafood treatment plant, and not for producing electricity.

FIG. 1

# FIG.2

SEA SURFACE

SEA FLOOR

EP 2 113 657 A2

EP 2 113 657 A2

# FIG.3

SEA SURFACE

SEA FLOOR

21

FIG.4

SEA SURFACE

SEA FLOOR

FIG.5

SEA SURFACE

SEA FLOOR

## FIG.6

SEA SURFACE

SEA FLOOR

## FIG.7

WAVES DIRECTION

FIG.8

FIG.9

FIG.10

FIG.11

WAVES DIRECTION

FIG.12

WAVES DIRECTION

# FIG.13

SEA SURFACE

50-51
50a-51a
52a-53a
52-53

1

54b
55b

54
55

50f-51f
52f-53f

SEA FLOOR

5

EP 2 113 657 A2

FIG.14

FIG.15

FIG.16

FIG.17

FIG.18

FIG.19

FIG.20

FIG.21

SEA SURFACE

SEA SURFACE

50

50b

50b1

50c

50d1

50d2

50a

50d

50e

50f

50b1

50b

50c

50d

50d1

50e

50f

FIG.22

SEA FLOOR

FIG.23

SEA FLOOR

FIG.24

FIG.25

SCALE : 1/30

# FIG.26

SCALE: $\frac{1}{30}$

EP 2 113 657 A2